# EUROPÄISCHE PATENTSCHRIFT

(11) **EP 2 071 270 B1**
(45) Veröffentlichungstag und Bekanntmachung des Hinweises auf die Patenterteilung: **22.01.2014**
(21) Anmeldenummer: 08021062.8
(22) Anmeldetag: 04.12.2008
(51) Int. Cl.: F41G 7/00, F42B 10/26, F42B 10/48, F42B 10/66, F41G 7/34, G05D 1/10

(54) **Taumelzünder**
Tilted igniter
Dispositif d'allumage en nutation

(30) Priorität: 10.12.2007 DE 102007059397
(43) Veröffentlichungstag der Anmeldung: 17.06.2009
(73) Patentinhaber: Diehl BGT Defence GmbH & Co. KG, 88662 Überlingen (DE)
(72) Erfinder: Gundel, Bernd, 91284 Neuhaus (DE); Graf, Hans-Rainer, 96049 Bamberg (DE); Hammer, Helmut, 90562 Heroldsberg (DE); Thurner, Günther, Dr., 90571 Schwaig (DE)
(74) Vertreter: Diehl Patentabteilung

(56) Entgegenhaltungen:
- EP-A2- 0 418 636
- DE-T2- 69 607 944

## Beschreibung

Die Erfindung betrifft ein Verfahren zur Flugbahnverkürzung eines Flugkörpers, insbesondere eines drallstabilisierten Geschosses, der eine Außenwandung aufweist, wobei der Flugkörper mit wenigstens einer Impulseinrichtung versehen ist und diese gezielt zu einem definierten Zeitpunkt während des Flugs des Flugkörpers aktivierbar ist.

Aus dem Stand der Technik sind Verfahren und Vorrichtung zur Flugbahnkorrektur eines ballistischen Geschosses mittels radialen Schüben bekannt, vgl. DE 696 07 944 T2. Dabei soll ein im Flug befindliches Geschoss mit einem Radialschub mit bestimmter Größe beaufschlagt werden, um zu bewirken, dass das Geschoss an einem gewünschten Ziel auftrifft. Dabei werden Informationen über die Geschossbahnkurve und Zielinformation unter Verwendung eines Computers zur Bestimmung des präzisen Zeitpunktes und zur Aktivierung der Radialschubkorrektur verwendet. Ferner ist das Geschoss mit einem Radialimpulsmotor versehen, um nach dem Basisverbrennungsschub ungefähr auf den Schwerpunkt des Geschosses zu wirken, um das Geschoss vor Taumeln zu bewahren.

Ferner ist aus der EP 0 418 636 A2 ein bahnkorrigierbares, spinstabilisiertes Projektil bekannt, welches mit einer Anzahl von Querschub-Antriebseinrichtungen versehen ist, die, am Umfang des Projektils verteilt angeordnet, mittels einer Steuereinrichtung individuell aktivierbar sind.

Der Erfindung liegt die Aufgabe zugrunde, ein Verfahren sowie eine Vorrichtung zur Flugbahnveränderung eines Flugkörpers, insbesondere eines drallstabilisierten Geschosses mit den Merkmalen des Oberbegriffes des Anspruches 1 derart weiterzubilden, dass eine hohe Zielgenauigkeit des Geschosses erreicht werden kann bei minimalem Raumbedarf der einflussnehmenden Elemente innerhalb des Geschosses, bei Entbehrung von aus der Außenwandung des Geschosses hervorstehender Teile und gegebenenfalls gänzlichem Verzicht auf bewegliche Teile. Als weitere Aufgabe der Erfindung ist es anzusehen, dass eine schrittweise Korrektur oder Veränderung der Flugbahn ermöglicht werden soll und die gesamte Einrichtung sowohl einen einfachen Aufbau als auch eine hohe Zuverlässigkeit aufweist. Darüber hinaus soll die Aufgabe der Counter Fire Datenverwirrung gelöst werden können.

Diese Aufgabe wird durch die kennzeichnenden Merkmale des Verfahrens gemäß Anspruch 1 sowie der Vorrichtung gemäß Anspruch 11 gelöst. Vorteilhafte Weiterbildungen der Erfindung ergeben sich aus den Unteransprüchen 2 - 10 sowie 12 - 15.

Als Kern der Erfindung/Neuerung wird es angesehen, die Impulseinrichtung bezogen auf die Längsachse des Flugkörpers derart anzuordnen, dass der von ihr ausgehende Impuls zur Flugbahnverkürzung oder -veränderung eine zeitweise Taumelbewegung des Flugkörpers einleitet. Durch das Hervorrufen einer gezielten Taumelbewegung kann beispielsweise die Fluggeschwindigkeit des Flugkörpers reduziert werden und damit einhergehend die Flugweite des Flugkörpers. Dabei ist ein überraschender Effekt, dass die sonst bei Flugkörpern und insbesondere bei drallstabilisierten Geschossen unerwünschte Taumelbewegung, wenn sie gezielt eingesetzt wird, die Zielgenauigkeit des Flugkörpers positiv beeinflusst. Dabei bietet die Impulseinrichtung ein probates Mittel, um durch den von ihr ausgesendeten Impuls oder den von ihr ausgehenden Impulsen ein breites Spektrum an Aktivierungsmöglichkeiten einer gezielten Taumelbewegung zu ermöglichen.

In einer bevorzugten Ausführungsform ist der Flugkörper als drallstabilisiertes Geschoss ausgebildet, insbesondere in dieser Flugkörperkategorie kann eine zeitweise Taumelbewegung erzeugende Impulseinrichtung kostengünstig realisiert werden und damit sowohl die Zielgenauigkeit durch die Manipulation der Flugbahn, als auch die Reduzierung der Fluggeschwindigkeit auf einfache Weise geschehen. Dabei ist eine vorteilhafte Maßnahme, wenn der von der Impulseinrichtung auf das Geschoss wirkende Impuls außermittig auf die Längsachse des Geschosses einwirkt. Durch die Anordnung der Impulseinrichtung bzw. des Angriffspunktes der Impulskraft außerhalb des Geschossschwer- bzw. -mittelpunktes wird der Grad des Taumelns des Geschosses bei konstantem Betrag der Impulskraft auf einfache Weise verstärkt. So kann der Impuls beispielsweise auf den Nasenbereich und/oder den Heckbereich des Geschosses einwirken. Der Impulskraftvektor kann bevorzugt senkrecht zur Mittellängsachse des Geschosses verlaufen, jedoch kann er auch einen Winkel kleiner 90° mit der Mittellängsachse des Geschosses einschließen. Damit kann die Impulskraft nicht nur als seitlicher Verschiebungsvektor wirken, sondern auch, zum Beispiel wenn nach vorne gerichtet, eine direkte Bremswirkung auf den Geschwindigkeitsvektor des Geschosses ausüben.

Bei der Anordnung zweier im Heck und im Nasenbereich des Flugkörpers angeordneter Impulseinrichtungen, die zumindest annähernd gleichzeitig aktiviert werden und auf den ihnen zugeordneten Bereichen des Flugkörpers gegeneinander wirkende Impulse abgeben, kann mit geringem Kraft-/Energieaufwand eine vergleichbare Impulsbewegung wie bei nur einer außermittig angeordneten Impulsladung erreicht werden.

Zur Erreichung einer seitlichen Korrektur der Flugbahn kann es zweckdienlich sein, wenigstens zwei im Heck- und im Nasenbereich im Wesentlichen auf eine Geschossquerschnittshälfte angeordnete Impulseinrichtung gleichzeitig zu aktivieren. Im Betrag der von den Impulseinrichtungen ausgehenden Kräfte können diese in diesem Fall gleich oder aber entsprechend des Verhaltens eines im Flug befindlichen Geschosses derart ausgelegt sein, dass neben einer Taumelbewegung eine möglichst effektive seitliche Verlagerung des Geschosses in der ursprünglichen Schubbahn erreicht wird. Beispielsweise kann die vordere Ladung 60 % und die hintere Ladung 40 % des gesamten Impulses umfassen, so dass durch die auf das Geschoss wirkenden Luftwiderstandskräfte eine vorbestimmbare Flugbahnveränderung seitlich der eigentlichen Flugbahn erreicht werden kann.

Darüber hinaus hat es sich als günstig erwiesen, die Impulseinrichtung aus mehrteilig aufgebauten pyrotechnischen Impulssätzen aufzubauen, die gezielt abgestuft aktiviert werden und/oder die Impulseiririchtung zu einem definierten Zeitpunkt während des Flugs des Geschosses zu aktivieren. Dadurch kann der Einfluss der Impulseinrichtung auf die Flugbahn des Geschosses noch definierter ausgelegt werden, da es einerseits möglich wird, an unterschiedlichen Positionen der Flugbahn eine Impulswirkung hervorzurufen als auch andererseits mittels einer Verlagerung eines beweglichen Massenelementes innerhalb des Geschosses den Schwerpunkt und damit die Anfälligkeit des Taumelns des Geschosses definiert zu initiieren und zu deaktivieren. Die aus mehrteilig aufgebauten pyrotechnischen Impulsen ausgebildete Impulseinrichtung weist unterschiedliche Impulsintensitäten für die jeweiligen Impulssätze auf. So dass flugbahn- bzw. flugkorrekturbedarfsabhängig unterschiedlich starke Impulse auf das Geschoss ausgeübt werden können.

Die Impulseinrichtung kann vorzugsweise als Impulssprengladung ausgebildet sein, die zu den entsprechenden Zeitpunkten bzw. flugbahnabhängig gezündet wird. Zusätzlich oder alternativ kann die Impulserzeugung der Impulseinrichtung dem Geschoss ein internes Massenelement umfassen, das gezielt verlagerbar ist. In einer weiteren vorteilhaften Ausgestaltung der ein Massenelement umfassenden Impulseinrichtung kann das Massenelement in seiner Lage innerhalb der Außenwandung fixierbar sein. Beispielsweise kann innerhalb des Geschosses eine gerade Anzahl an Massenelementen bevorratet sein, die derart gelagert sind, dass diese während des Flugs des Geschosses gezielt zur Erzeugung einer Schwerpunktsverlagerung gelöst und/oder fixiert werden können. Damit wird es ermöglicht, den Schwerpunkt des Geschosses während des Flugs beispielsweise in eine erste Position, dann in eine zweite Position und anschließend in die Ausgangslage wieder zurückzuverlagern und damit die Flugbahn definiert zu beeinflussen.

Um das für die Impulseinrichtung benötigte Volumen innerhalb des Geschosses zu reduzieren, ist es zweckmäßig, wenn das Aktivierungssignal kabellos an die Impulseinrichtung übermittelt wird, somit werden Kabel oder sonstige physische Informationsübermittelungselemente entbehrbar.

Die Zielgenauigkeit des Geschosses kann weiter dadurch erhöht werden, dass computergeschützte Informationen über die Witterungsbedingungen, Windverhältnisse und/oder Luft-Wärmeverteilung für die Bestimmung des Aktivierungszeitpunktes der Impulseinrichtung mit berücksichtigt werden. Dies kann beispielsweise derart von statten gehen, dass die orts- und/oder zeitabhängigen Informationen über Witterungsbedingungen, Windverhältnisse und/oder Luft-Wärmeverteilung vor dem Abschuss des Geschosses an dieses übermittelt wird oder zum Beispiel bereits verschiedene Witterungsverhältnisse in dem Geschoss gespeichert sind und nur noch ein jeweiliges beispielsweise witterungsabhängiges Aktivierungsschema zugeordnet werden muss.

Als besonders vorteilhaft hat sich erwiesen, den Zeitpunkt für die Aktivierungssignalübertragung an die Impulseinrichtung von einer örtlichen über ein GPS-Signal ermittelte Position des Geschosses zu koppeln. Dies bedeutet, dass das Geschoss während des Flugs ein GPS-Signal empfängt und damit seine eigene Lage ermittelt und abhängig von dieser Information die Impulseinrichtung entsprechend aktiviert.

In diesem Zusammenhang ist es weiter vorteilhaft, wenn während des Fluges des Geschosses mehrmals die Ist-Position des Geschosses über GPS-Daten mit der SollPosition verglichen wird und zur Flugbahnkorrektur mehrmals Impulse der Impulseinrichtung aktiviert werden. Gemäß einer weiteren Ausgestaltung der Erfindung wird die Impulseinrichtung zu einem bestimmten Zeitpunkt bei einer definierten Rolllage des Geschosses aktiviert. Die Mitberücksichtigung der Rolllage ermöglicht es, die Flugbahnveränderung vorhersehbarer zu verändern, insbesondere bei einer lateralen Flugbahnveränderung.

Im Sinne einer Zusatzfunktion kann es vorgesehen sein, dass bei Abschluss des Geschosses Zieldaten eingegeben werden, die in einem über den tatsächlichen Zieldaten liegenden Zielbereich angeordnet sind und durch eine oder mehrere Taumelbewegungsphasen eine gezielte Einsteuerung des Geschosses in die tatsächlichen Zieldaten vorgesehen wird. Moderne Anti-Artillerie-Einheiten sind mit einer sogenannten Counter Fire Funktion versehen, diese funktioniert derart, dass die Anti-Artillerie-Einheit die vom Gegner abgeschossenen Geschosse detektiert und aus der Zurückberechnung der Flugbahn des detektierten Geschosses die Position der gegnerischen Artillerie ortet und sogleich diese Information für ihre Zieldatenbestimmung verwendet. Wenn nun durch die Einstellung der Zieldaten des Geschosses über die tatsächlichen Zieldaten hinaus eingestellt werden und durch die Einleitung einer oder mehrerer Taumelbewegungen das Geschoss auf die eigentlichen, tatsächlichen Zieldaten eingesteuert wird, ergibt sich für das Geschoss eine unkonventionelle, für die Gegenseite nicht vorhersehbare und insbesondere nicht zurückrechenbare Flugbahn. Somit wird es für den Gegner erschwert, wenn nicht unmöglich gemacht, mittels der modifizierten Flugbahn des Geschosses den Standort der Artillerie zu orten.

Die Erfindung umfasst neben dem Verfahren auch ein drallstabilisiertes Geschoss, das besondere erfindungsspezifische Merkmale aufweist. In einer bevorzugten Ausgestaltung des drallstabilisierten Geschosses weist dieses eine Impulseinrichtung auf, die ein zumindest phasenweise beweglich gelagertes Massenelement umfasst. Dabei kann die Impulseinrichtung wenigstens zwei Massenelemente umfassen, die innerhalb des Geschosses gezielt separat verlagerbar sind, um - wie oben beschrieben - eine definierte Schwerpunktsveränderung des Geschosses während des Fluges zu initiieren und um den Schwerpunkt wieder gegebenenfalls in seine Ausgangslage zurückzuversetzen.

Um die Zielgenauigkeit des Geschosses weiter zu verbessern, sieht eine vorteilhafte Ausgestaltung der Vorrichtung vor, innerhalb des Geschosses einen GPS-Empfänger und eine Rechnereinheit zur Aktivierung der Impulseinrichtungen anzuordnen. Diese elektronischen Einheiten werden über einen Energiespeicher gespeist. Ferner kann das drallstabilisierte Geschoss weiter darin verbessert werden, indem innerhalb des Geschosses ein Speicher angeordnet ist, der die Recheneinheit zusätzlich zu den GPS-Daten des Empfängers mit Daten versorgt, die eine Modifizierung einer regulären Flugbahn erlauben. Diese zusätzlichen Informationen können beispielsweise Wetter-, Witterungs-, Zielobjektdaten und/oder Daten über eine im Voraus zumindest zum Teil vorbestimmte Abfolge bestimmter Impulsaktivierungen für eine grundsätzliche Veränderung der Flugbahn umfassen.

Die Erfindung ist anhand von Ausführungsbeispielen in den Zeichnungsfiguren näher erläutert. Diese zeigen
- Figur 1:: eine schematische Darstellung der Flugbahn des Geschosses und einer angedeuteten Taumelbewegung des Geschosses;
- Figur 2:: eine schematische Darstellung der konventionellen und modifizierten Flugbahn eines Geschosses;
- Figur 3:: eine schematische Querschnittsdarstellung des Geschosses mit einer Vielzahl an Impulseinrichtungen;
- Figur 4a - c:: eine schematische Querschnittsdarstellung einer alternativen Impulseinrichtung in unterschiedlichen Schwerpunktslagen;
- Figur 5a und b:: eine schematische Darstellung der auf das Geschoss wirkenden Impulskräfte bei einer überwiegenden Taumelbewegung (a) und einer überwiegend lateralen Flugbahnveränderung (b);
- Figur 6:: eine schematische Längsschnittsdarstellung des erfindungsgemäßen Geschosses.

In Zeichnungsfigur 1 ist ein drallstabilisiertes Geschoss 1 mit seiner angedeuteten Flugbahn 2 dargestellt. In der tiefer liegenden Position des Geschosses 1 wird eine Taumelbewegung angedeutet. Wie in Zeichnungsfigur 6 dargestellt, weist das Geschoss 1 eine Außenwandung 3 und eine Impulseinrichtung 4 auf. Die Impulseinrichtung kann zu einem definierten Zeitpunkt während des Flugs des Geschosses 1 aktiviert werden, um eine Taumelbewegung des Geschosses 1 einzuleiten. Hierfür ist die Impulseinrichtung derart bezogen auf die Längsachse 5 angeordnet, dass durch den von ihr ausgehenden Impuls I eine zeitweise Taumelbewegung des Geschosses 1 einleitbar ist und dieser eine Flugbahnverkürzung oder -veränderung hervorruft. Die Taumelbewegung lässt sich durch eine dezentrale Anordnung der Impulseinrichtungen 4 erreichen. Da gerade eine Anordnung der Impulseinrichtung 4 im Nasenbereich 6 und/oder im Heckbereich 7 bei deren Aktivierung eine Taumelbewegung initiieren.

In Zeichnungsfigur 2 ist eine konventionelle Flugbahn 2 (gestrichelt) dargestellt, die das Geschoss 1 ohne ein Hervorrufen einer Taumelbewegung vollziehen würde. Die gepunktete Flugbahn 2' stellt die modifizierte Flugbahn 2' dar, die durch die Aktivierung der Impulseinrichtung 4, erzeugbar ist. In diesem Zusammenhang ist das Geschoss 1 derart abzufeuern, dass die konventionelle Flugbahn 2 über das eigentliche Ziel 12 hinausreicht, das heißt dass bei Abschuss des Geschosses 1 Zieldaten 13 eingegeben werden, die in einem über den tatsächlichen Zieldaten 12 liegenden Zielbereich angeordnet sind und durch eine oder mehrere Taumelbewegungsphasen eine gezielte Einsteuerung des Geschosses 1 in die tatsächlichen Zieldaten 12 vorgesehen wird.

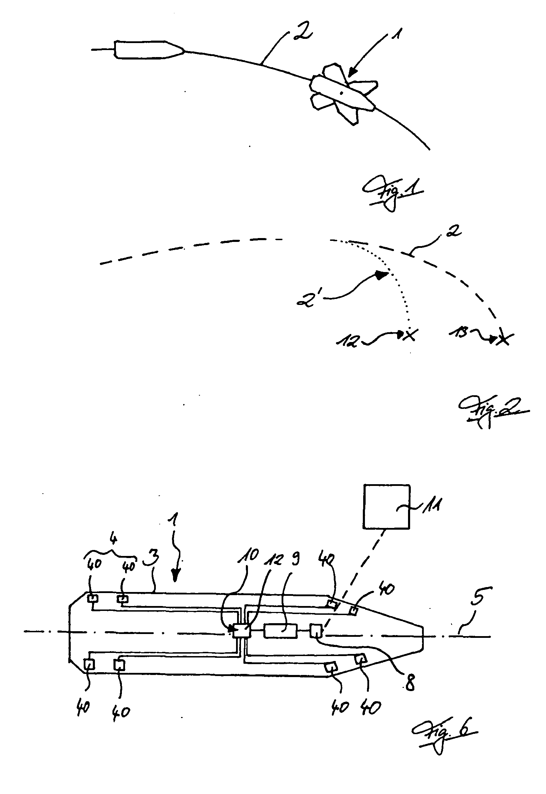

Die Impulseinrichtung 4 kann entweder eine oder mehrere Impulsladungen 40, die als Sprengladungen ausgebildet sind, umfassen (vgl. Fig. 6) oder als wenigstens ein verlagerbares Massenelement 41, 41' (vgl. Fig. a - c) ausgebildet sein. Die Impulsladungen 40 können beispielsweise diametral gegenüberliegend innerhalb des Geschosses 1, wie in Zeichnungsfigur 3 dargestellt, angeordnet sein.

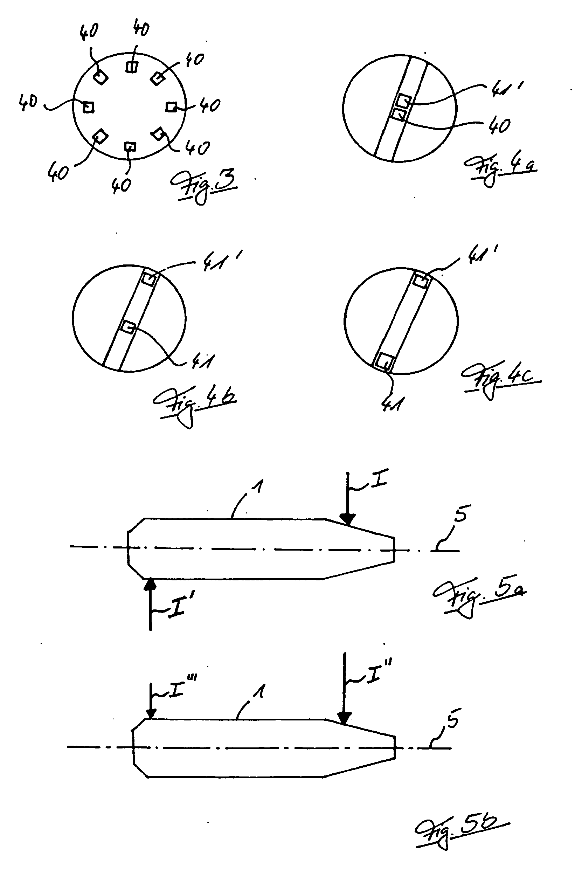

Wenn die Impulseinrichtung 4 gemäß des Ausführungsbeispieles in Figuren 4a bis c wenigstens zwei Massenelemente 41, 41' umfasst, sind diese innerhalb des Geschosses 1 gesondert und gezielt verlagerbar, so dass ausgehend von einem in seinen Gewichtsverhältnissen zum Geschossmittelpunkt symmetrischen Gewichtsverteilung (Fig. 4a) durch Verlagerung eines Massenelementes 41' eine "Unwucht" innerhalb des Geschosses, das durch seine Drallstabilisierung verstärkt wird, erzeugt wird, gerät das Geschoss ins taumeln. Wenn nun ausgehend von Figur 4b das ausgelagerte Massenelement 41' wieder in das Zentrum zurückverlagert wird oder das weitere Massenelement 41 ebenfalls in eine vom Mittelpunkt des Geschosses 1 entferntere Position verlagert wird, kann wiederum gesondert und gezielt eine symmetrische Massenverteilung innerhalb des Geschosses 1 erreicht werden (vgl. Fig. 4a/4c).

Damit das Geschoss 1 abhängig von seinem Flugverhalten (Flughöhe, X-Y-Flugdaten), das über ein GPS-System bestimmbar ist, während des Flugs seine Flugbahn gezielt verändern kann, ist es notwendig, innerhalb des Geschosses 1 einen GPS-Empfänger 8 und eine Recheneinheit 9 vorzusehen, die entweder direkt oder über einen A/D-Wandler 10 die Impulsladungen 40 und/oder die Massenelemente 41, 41' aktiviert. Ferner kann das Geschoss 1 einen Speicher (nicht dargestellt) umfassen, der die Rechnereinheit 9 zusätzlich zu den GPS-Daten des GPS-Empfängers 8 mit Daten versorgt, die eine Modifizierung einer regulären Flugbahn 2 erlauben. Die vom GPS-Empfänger 8 empfangenen Daten werden von einem GPS-Satelliten 11 ausgesendet. Der beschriebene Analog-/Digitalwandler 10 kann beispielsweise ein Steuersignale empfangendes und Leistungssignale aussendendes Ladungszündungselement 12 sein.

Die Wirkungsweise der Impulsladungen 40 wird in den Zeichnungsfiguren 5a und 5b verdeutlicht. Einerseits kann der Impuls I außermittig (von der Längsachse 5) einwirken, um eine Taumelbewegung hervorzurufen. Zusätzlich kann im Längsschnitt betrachtet "diagonal" gegenüberliegend gleichzeitig ein weiterer Impuls I aktiviert werden, um den Taumeleffekt zuverlässiger und berechenbarer zu initiieren (vgl. Fig. 5a). In Fig. 5b wird neben der Taumelbewegung auch eine laterale Veränderung der Flugbahn 2 erreicht, indem an einer Längsschnitthälfte des Geschosses zwei unterschiedlich starke Impulsladungen 40 aktiviert werden, so dass zwei Impulse I", I"' unterschiedlicher Beträge auf das Geschoss einwirken. Die Längen der Pfeile I, I', I", I''' spiegeln die Beträge der Impulse I, I', I", I"' wider.

### BEZUGSZEICHENLISTE

- I: Impuls
- 1: Geschoss
- 2: Flugbahn
- 3: Außenwandung v. 1
- 4: Impulseinrichtung
- 5: Längsachse v. 1
- 6: Nasenbereich v. 1
- 7: Heckbereich v. 1
- 8: GPS-Empfänger
- 9: Rechnereinheit
- 10: A/D-Wandler
- 11: GPS-Satellit
- 12: Tatsächliche Zieldaten
- 40: Impulsladungen
- 41, 41': Massenelement

## Patentansprüche

1. Verfahren zur Flugbahnverkürzung eines Flugkörpers, insbesondere eines drallstabilisierten Geschosses, der eine Außenwandung aufweist, wobei der Flugkörper mit wenigstens einer Impulseinrichtung versehen ist und diese gezielt zu einem definierten Zeitpunkt während des Flugs des Flugkörpers aktivierbar ist,
**dadurch gekennzeichnet,**
**dass** die Impulseinrichtung bezogen auf die Längsachse des Flugkörpers derart angeordnet ist, dass ein oder mehrere erste von ihr ausgehende Impulse eine oder mehrere Taumelbewegungsphasen während des Flugs des Flugkörpers einleiten, während derer der Flugkörper eine zeitweise, flugbahnverkürzende Taumelbewegung durchführt, wobei jede der Taumelbewegungsphasen von einem jeweiligen zweiten Impuls der Impulseinrichtung wieder beendet wird.

2. Verfahren nach Anspruch 1,
**dadurch gekennzeichnet,**
**dass** der Flugkörper als drallstabilisiertes Geschoss ausgebildet ist.

3. Verfahren nach Anspruch 1 oder 2,
**dadurch gekennzeichnet,**
**dass** der von der Impulseinrichtung auf das Geschoss einwirkende Impuls außermittig auf die Längsachse des Geschosses einwirkt.

4. Verfahren nach Anspruch 3,
**dadurch gekennzeichnet,**
**dass** zwei im Heck- und im Nasenbereich des Flugkörpers angeordnete Impulseinrichtungen im Wesentlichen gleichzeitig aktiviert werden und auf den ihnen zugeordneten Bereich des Flugkörpers gegeneinander wirkende Impulse abgeben.

5. Verfahren nach Anspruch 3 oder 4,
**dadurch gekennzeichnet,**
**dass** wenigstens zwei im Heck- und im Nasenbereich im Wesentlichen auf einer Geschossquerschnittshälfte angeordneten Impulseinrichtungen zur Korrektur der seitlichen Flugbahn im Wesentlichen gleichzeitig aktiviert werden.

6. Verfahren nach einem der vorhergehenden Ansprüche,
**dadurch gekennzeichnet,**
**dass** die Impulseinrichtung mehrteilig aufgebaute pyrotechnische Impulssätze umfasst, die gezielt abgestuft aktiviert werden und/oder die Impulseinrichtung zu einem definierten Zeitpunkt während des Flugs des Geschosses deaktivierbar ist.

7. Verfahren nach einem der vorhergehenden Ansprüche,
**dadurch gekennzeichnet,**
**dass** die Impulseinrichtung mehrteilig aufgebaute pyrotechnische Impulssätze umfasst, die unterschiedliche Impulsintensitäten aufweisen.

8. Verfahren nach einem der vorhergehenden Ansprüche,
**dadurch gekennzeichnet,**
**dass** zur Impulserzeugung eine Impulssprengladung gezündet wird.

9. Verfahren nach einem der vorhergehenden Ansprüche,
**dadurch gekennzeichnet,**
**dass** zur Impulserzeugung im Geschoss gezielt ein internes Massenelement verlagert wird.

10. Verfahren nach einem der vorhergehenden Ansprüche,
**dadurch gekennzeichnet,**
**dass** der Zeitpunkt für die Aktivierungssignalübertragung an die Impulseinrichtung von einer örtlichen, über ein GPS-Signal ermittelten Position des Geschosses abhängig ist.

11. Drallstabilisiertes Geschoss (1), das hinsichtlich seiner Flugbahn (2) verkürzbar ist und eine Außenwandung (3) aufweist sowie mit einer Impulseinrichtung (4) versehen ist, die gezielt zu einem definierten Zeitpunkt während des Flugs des Geschosses (1) aktivierbar ist,
**dadurch gekennzeichnet,**
**dass** die Impulseinrichtung (4) derart bezogen auf die Längsachse (5) des Geschosses (1) angeordnet ist, dass durch einen oder mehrere erste von ihr ausgehende Impulse eine oder mehrere Taumelbewegungsphasen während des Flugs des Geschosses (1) einleitbar sind, während derer das Geschoss (1) eine zeitweise, flugbahnverkürzende Taumelbewegung durchführt, wobei die Impulseinrichtung (4) eingerichtet ist, jede der Taumelbewegungsphasen durch einen jeweiligen zweiten Impuls wieder zu beenden.

12. Drallstabilisiertes Geschoss nach Anspruch 11,
**dadurch gekennzeichnet,**
**dass** die Impulseinrichtung (4) mehrere Impulsladungen (40) aufweist, die diametral gegenüberliegend innerhalb des Geschosses angeordnet sind.

13. Drallstabilisiertes Geschoss nach Anspruch 11 oder 12,
**dadurch gekennzeichnet,**
**dass** die Impulseinrichtung (4) als Impulssprengladung (40) ausgebildet ist.

14. Drallstabilisiertes Geschoss nach einem der Ansprüche 11 bis 13,
**dadurch gekennzeichnet,**
**dass** die Impulseinrichtung (4) als wenigstens ein verlagerbares Massenelement (41) ausgebildet ist.

15. Drallstabilisiertes Geschoss nach einem der Ansprüche 11 bis 14,
**dadurch gekennzeichnet,**
**dass** innerhalb des Geschosses (1) ein GPS-Empfänger (8) und eine Rechnereinheit (9) zur Aktivierung der Impulseinrichtung (4) angeordnet sind.

## Claims

1. Method for shortening the flight path of a missile, in particular of a spin-stabilized projectile, which has an outer wall, wherein the missile is provided with at least one impulse device and this impulse device can be activated deliberately at a defined time during the flight of the missile,
**characterized**
**in that** the impulse device is arranged with respect to the longitudinal axis of the missile such that one or more first impulses originating from said impulse device initiate one or more tumbling movement phases during the flight of the missile during which the missile carries out a tumbling movement, at times, that shortens the flight path, each of the tumbling movement phases being ended again by a respective second impulse from the impulse device.

2. Method according to Claim 1,
**characterized**
**in that** the missile is in the form of a spin-stabilized projectile.

3. Method according to Claim 1 or 2,
**characterized**
**in that** the impulse which acts from the impulse device on the projectile acts eccentrically on the longitudinal axis of the projectile.

4. Method according to Claim 3,
**characterized**
**in that** two impulse devices which are arranged in the tail area and in the nose area of the missile are activated essentially at the same time and emit impulses, which act with respect to one another, to the area of the missile associated with them.

5. Method according to Claim 3 or 4,
**characterized**
**in that** at least two impulse devices which are arranged essentially on a projectile cross-sectional half in the tail area and in the nose area are activated essentially at the same time in order to correct the lateral flight path.

6. Method according to one of the preceding claims,
**characterized**
**in that** the impulse device comprises a plurality of pyrotechnic impulse charges which are activated deliberately in a stepped manner, and/or the impulse device can be deactivated at a defined time during the flight of the projectile.

7. Method according to one of the preceding claims,
**characterized**
**in that** the impulse device comprises a plurality of pyrotechnic impulse charges which have different impulse intensities.

8. Method according to one of the preceding claims,
**characterized**
**in that** an impulse explosive charge is fired for impulse production.

9. Method according to one of the preceding claims,
**characterized**
**in that** an internal mass element is deliberately moved for impulse production in the projectile.

10. Method according to one of the preceding claims,
**characterized**
**in that** the time for activation signal transmission to the impulse device is dependent on a local position of the projectile, determined via a GPS signal.

11. Spin-stabilized projectile (1) whose flight path (2) can be shortened and which has an outer wall (3) and is provided with an impulse device (4) which can be activated deliberately at a defined time during the flight of the projectile (1),
**characterized**
**in that** the impulse device (4) is arranged with respect to the longitudinal axis (5) of the projectile (1) such that by means of one or more first impulses originating from said impulse device, one or more tumbling movement phases during the flight of the projectile (1) can be initiated during which the projectile (1) carries out a tumbling movement, at times, which shortens the flight path, the impulse device (4) being designed to end each of the tumbling movement phases again by means of a respective second impulse.

12. Spin-stabilized projectile according to Claim 11,
**characterized**
**in that** the impulse device (4) has a plurality of impulse charges (40) which are arranged diametrically opposite within the projectile.

13. Spin-stabilized projectile according to Claim 11 or 12,
**characterized**
**in that** the impulse device (4) is in the form of an impulse explosive charge (40).

14. Spin-stabilized projectile according to one of Claims 11 to 13,
**characterized**
**in that** the impulse device (4) is in the form of at least one moveable mass element (41).

15. Spin-stabilized projectile according to one of Claims 11 to 14,
**characterized**
**in that** a GPS receiver (8) and a computer unit (9) for activation of the impulse device (4) are arranged within the projectile (1).

## Revendications

1. Procédé pour raccourcir la trajectoire d'un missile, en particulier d'un projectile gyrostabilisé, qui présente une paroi extérieure, le missile étant muni au moins d'un système à impulsions et celui-ci étant activable de manière précise à un moment défini pendant le vol du missile,
**caractérisé en ce que**
le système à impulsions est disposé en référence à l'axe longitudinal du missile de telle sorte qu'une ou plusieurs premières impulsions provenant de lui initient une ou plusieurs phases de nutation pendant le vol du missile pendant lesquelles le missile effectue une nutation raccourcissant temporairement la trajectoire, chacune des phases de nutation étant à nouveau terminée par une deuxième impulsion respective du système à impulsions.

2. Procédé selon la revendication 1,
**caractérisé en ce que**
le missile est constitué comme un projectile gyrostabilisé.

3. Procédé selon la revendication 1 ou 2,
**caractérisé en ce que**
l'impulsion du système à impulsions agissant sur le projectile agit de façon excentrique sur l'axe longitudinal du projectile.

4. Procédé selon la revendication 3,
**caractérisé en ce que**
deux systèmes à impulsions disposés dans la partie arrière et du nez du missile sont pour l'essentiel simultanément activés et émettent des impulsions agissant les unes envers les autres sur la zone du missile qui leur est attribuée.

5. Procédé selon la revendication 3 ou 4,
**caractérisé en ce**
**qu'**au moins deux systèmes à impulsions disposés dans la partie arrière et de nez pour l'essentiel sur une moitié de la section transversale du projectile sont pour l'essentiel simultanément activés pour la correction de la trajectoire latérale.

6. Procédé selon une quelconque des revendications précédentes,
**caractérisé en ce que**
le système à impulsions comprend des jeux d'impulsions pyrotechniques structurés en plusieurs parties, qui sont progressivement activés de façon précise et/ou **en ce que** le système à impulsions peut être désactivé à un moment défini pendant le vol du projectile.

7. Procédé selon une quelconque des revendications précédentes,
**caractérisé en ce que**
le système à impulsions comprend des jeux d'impulsions pyrotechniques structurés en plusieurs parties, qui présentent des intensités d'impulsion différentes.

8. Procédé selon une quelconque des revendications précédentes,
**caractérisé en ce**
**qu'**une charge explosive par impulsion est allumée pour produire une impulsion.

9. Procédé selon une quelconque des revendications précédentes,
**caractérisé en ce**
**qu'**un élément de masse interne est déplacé de façon précise dans le projectile pour produire une impulsion.

10. Procédé selon une quelconque des revendications précédentes,
**caractérisé en ce que**
le moment pour la transmission du signal d'activation au système à impulsions dépend d'une position locale du projectile déterminée par un signal GPS.

11. Projectile (1) gyrostabilisé dont la trajectoire (2) peut être raccourcie et qui présente une paroi extérieure (3) et est également muni d'un système à impulsions (4), qui est activable de manière précise à un moment défini pendant le vol du projectile (1),
**caractérisé en ce que**
le système à impulsions (4) est disposé en référence à l'axe longitudinal (5) du projectile (1) de telle sorte que par une ou plusieurs premières impulsions provenant de lui, une ou plusieurs phases de nutation peuvent être initiées pendant le vol du projectile (1) pendant lesquelles le projectile (1) effectue une nutation raccourcissant temporairement la trajectoire, le système à impulsions (4) étant mis en oeuvre pour terminer à nouveau chacune des phases de nutation par une deuxième impulsion respective.

12. Projectile gyrostabilisé selon la revendication 11,
**caractérisé en ce que**
le système à impulsions (4) présente plusieurs charges à impulsion (40) qui sont disposées diamétralement face à face à l'intérieur du projectile.

13. Projectile gyrostabilisé selon les revendications 11 ou 12,
**caractérisé en ce que**
le système à impulsions (4) est constitué comme une charge explosive par impulsion (40).

14. Projectile gyrostabilisé selon une quelconque des revendications 11 à 13,
**caractérisé en ce que**
le système à impulsions (4) est constitué au moins comme un élément de masse (41) déplaçable.

15. Projectile gyrostabilisé selon une quelconque des revendications 11 à 14,
**caractérisé en ce**
**qu'**à l'intérieur du projectile (1) sont disposés un récepteur GPS (8) et une unité de calcul (9) pour activer le système à impulsions (4).
